# EUROPEAN PATENT APPLICATION

(11) **EP 2 644 626 A1**
(43) Date of publication of application: **02.10.2013**
(21) Application number: 12161381.4
(22) Date of filing: 27.03.2012
(51) Int. Cl.: C08F 2/06, C08F 220/12, C08J 3/07, C09D 133/06, C09J 133/06

(54) **Aqueous secondary copolymer dispersions with a low organic solvent content**

(71) Applicant: Bayer MaterialScience AG, 51373 Leverkusen (DE)
(72) Inventor: Avtomonov, Evgeny, 51375 Leverkusen (DE); Yuva, Nusret, 51399 Burscheid (DE); Gewiß, Heinz-Dietmar, 40668 Meerbusch (DE); Irle, Christoph, 200135 Shanghai (CN); Melchiors, Martin, 42799 Leichlingen (DE); Schrinner, Marc Claudius, 51103 Köln (DE)

(57) **Abstract**

An aqueous secondary copolymer dispersion comprises a copolymer (P) obtained by a process comprising the steps of: A) introducing at least one organic solvent into a reaction vessel, whereby the organic solvent optionally comprises a polymer containing hydroxyl groups; B) introducing an initiator component into that vessel; C) adding and polymerizing a monomer mixture comprising monomers containing hydroxyl groups in that vessel and D) adding and polymerizing a monomer mixture comprising monomers containing hydroxyl and acid groups in that vessel. The polymerization is conducted in the presence of an organic solvent selected from the group consisting of ethers, esters, ketones and alcohols, the solvent having a boiling point of ≥ 35 °C and ≤ 120 °C and the organic solvent is at least partially removed after in step G). The invention also concerns the use of such dispersions in coating and/or adhesive materials.

## Description

The present invention relates to environmentally friendly aqueous copolymer dispersions with a low organic solvent content, a process for their preparation and their use in coating and/or adhesive compositions.

It is known from a large number of publications and patents to employ dispersions based on copolymers in water-dilutable paints and coating compositions. In this field various copolymer compositions are disclosed, which, in combination with the physical and chemical properties of the dispersing liquid, offer special functional benefits for the desired application.

Aqueous secondary copolymer dispersions enjoy widespread use in the art as coating materials and as binders. Secondary polyacrylate dispersions belong to the highest performing binders which are distinguished by significantly lower molecular weights than their counterparts in other substance classes. In this respect, the term "secondary dispersions" refers to those aqueous dispersions which are polymerized in a homogenous organic medium and thereafter are dispersed in an aqueous medium. The water-dilutability is typically achieved by at least partial neutralization of incorporated acid groups , generally without the need of adding external emulsifiers.

For example, US 6,399,691 relates to a hydroxy-functional copolymer (P), which is present as a dispersion and/or solution in water, and is obtained by successively carrying out process steps A-D: A) initially introducing a hydrophobic polymer containing hydroxyl groups into a reaction vessel, B) introducing an initiator component into that vessel, C) subsequently polymerizing a hydrophobic monomer mixture containing hydroxyl groups in that vessel and D) subsequently polymerizing a hydrophilic monomer mixture containing hydroxyl and acid groups in that vessel. This document also relates to a process for the preparation of copolymers (P) following the procedure previously set forth and to coating compositions containing these copolymers (P) and one or more crosslinking agents.

In more detail, EP 1 024 184 A1 describes copolymers obtained by (A) placing a hydrophobic polymer with hydroxyl groups in a reactor, optionally with solvent, (B) adding a radical starter (optionally in solution), (C) polymerizing a hydrophobic, OH group-containing monomer mixture in the reactor and (D) polymerizing a hydrophilic, OH and acid group-containing monomer mixture in the reactor.

Independent claims are also included for (i) dispersions and solutions containing these copolymers; (ii) aqueous coating materials containing dispersed or dissolved, OH-functional copolymers (P) with an acid number of less than 30 mg KOH/g, optionally other binders and cross-linker(s), in which P is obtained by (A) charging the reactor with (A1) 0-40 weight-% (based on P) OH-functional hydrophobic polymer with an acid number of less than 10 (insufficient for dissolution or dispersion in water), an OH content of 0,5-7%, an average molecular weight Mₙ of 1500-20000 g/mol and an organic solvent content of 0-60 weight-% and (A2) 0-15 weight-% additional organic solvent, heating to polymerization temperature, (B) adding 5-40 weight-% (based on B1+ C2+D2) radical starter (B1) (optionally in solution), (C) adding (C1) 40-80 weight-% hydrophobic, carboxyl group-free monomer mixture comprising (c1) 30-90 weight-% 1-18C alkyl (meth)acrylate and/or vinylaromatic and/or vinyl ester, (c2) 10-60 weight-% OH-functional monomers and (c3) 0-2 weight-% acid group-containing monomers in parallel with (C2) 25-90% of the total amount of starter (B1+C2+D2) and (D) adding (D1) 5-50 weight-% hydrophilic monomer mixture comprising (d1) 10-70 weight-% monomers as in (c1), (d2) 10-70 weight-% OH-functional monomers and (d3) 5-30 weight-% acid monomers in parallel with (D2) 5-40% of the total amount of starter (where B1+C2+D2 = 0.8-5.0 weight-% based on P); (iii) a process as described in (ii) for the production of copolymer (P) as an aqueous dispersion and/or solution and (iv) aqueous coating materials containing these copolymers and various types of crosslinkers. This patent application is particularly concerned with avoiding distillation steps in the preparation process.

In addition US 2002/0151638 discloses a hydroxy-functional copolymer (P), which is present as a dispersion and/or solution in water, and is obtained by successively carrying out process steps A-D: A) initially introducing a hydrophobic polymer containing hydroxyl groups into a reaction vessel, B) introducing an initiator component into that vessel, C) subsequently polymerizing a hydrophobic monomer mixture containing hydroxyl groups in that vessel and D) subsequently polymerizing a hydrophilic monomer mixture containing hydroxyl and acid groups in that vessel. Also described is a process for the preparation of copolymers (P) following the procedure previously set forth and to coating compositions containing these copolymers (P) and one or more crosslinking agents. This patent application is also concerned with avoiding distillation steps in the preparation process.

In the preparation of the secondary acrylate copolymers, generally high polymerization temperatures and relatively high amounts of the radical initiators are needed to achieve the desired relatively low molecular weight. Inert solvents or thinners are necessary to start-up the batch polymerization and to facilitate the agitation and heat transfer at the beginning of the reaction as well as to facilitate the transfer to a subsequent dispersion vessel. Up to 8 weight-%, based on the total weight of the final product dispersion, of organic solvent may remain in the final product.

Due to market demand and environmental, health and safety concerns it would be desirable to have copolymer dispersions for coating purposes with an organic co-solvent as low as possible while at the same time not compromising the properties of the coating. Therefore, the present invention has the object of providing such low co-solvent dispersions with a high solids content, comprising copolymer particles with a low mean particle size.

According to the invention this object is achieved by an aqueous secondary copolymer dispersion comprising a copolymer (P) obtained by a process comprising the steps of:
A) introducing at least one organic solvent into a reaction vessel, whereby the organic solvent optionally comprises a polymer containing hydroxyl groups,
B) introducing an initiator component into that vessel,
C) adding and polymerizing a monomer mixture comprising monomers containing hydroxyl groups in that vessel,
D) adding and polymerizing a monomer mixture comprising monomers containing hydroxyl and acid groups in that vessel,
E) at least partially neutralizing the acid groups,
F) adding water and
G) at least partially removing the organic solvent,
   whereby the organic solvent is selected from the group consisting of ethers, esters, ketones and alcohols each having a boiling point in the range of ≥ 35 °C and ≤ 120 °C at a pressure of 1013 mbar.

The dispersions according to the invention meet the demand for a lower content of organic solvents. Furthermore, the particle size of the dispersions can surprisingly be lower than in comparable dispersions known in the art. Furthermore, the accessible solids content at a given viscosity can be higher than for dispersions known in the art. Such dispersions are easy to apply, show good storage stability and demonstrate all beneficial properties of secondary copolymer dispersions known in the art, while containing a low solvent amount.

For the purposes of the present invention, acrylic acid or methacrylic acid are also defined as (meth)acrylic acid and the definitions of corresponding ester derivatives of acrylic and methacrylic acid follow the same reasoning.

Solids contents may be determined according to DIN EN ISO 3251 and are expressed as weight-%. OH numbers are determined according to DIN 53240/2 and acid numbers are determined according to DIN 53402. Hydroxyl contents (weight-%) can be calculated from the hydroxyl numbers. Viscosities are determined with a ball-plate viscosimeter in accordance with DIN 53019 at a shear gradient of 40 s⁻¹ and a temperature of 23 °C. Unless noted otherwise, weight ranges of components in compositions are to be understood as modified by the term "the total weight percentages adding up to = 100 weight-percent".

In particular, the nature and amount of the organic solvent or the organic solvent mixture may be chosen so that a sufficient reaction vessel filling level and removal of heat is ensured at the start of the polymerization of part C). The solvent is also selected with respect to a low boiling point, which eases the removal of the organic solvent in step G). For example, a maximum of 25 weight-%, preferably from ≥ 3 weight-% to ≤ 15 weight-%, based on the solids content of copolymer (P), may be employed as organic solvent at this step.

With the proviso of the boiling points in the above-described ranges, suitable ethers include unsubstituted and alkyl-substituted ethers with 4 to 8 C-atoms. Suitable esters are alkyl esters of formic, acetic and propionic acid, such as ethyl formiate, n-propyl formiate, isopropyl formiate, n-butyl formiate, iso-butyl formiate, 2-butyl formiate, methyl acetate, ethyl acetate, n-propyl acetate, isopropyl acetate, iso-butyl acetate, methyl propionate, ethyl propionate. Suitable ketones include symmetrical and unsymmetrical, linear, branched or cyclic alkyl ketones and suitable alcohols include symmetrical and unsymmetrical, linear, branched or cyclic alkanols. Preferably the boiling point of the solvent or solvent mixture is ≥ 50 °C and ≤ 90 °C.

In another embodiment of the dispersion according to the invention the organic solvent is chosen from the group consisting of acetone, methylethylketone, diethylether, tetrahydrofurane, t-butylmethylether, 1,4-dioxane, methanol, ethanol, n-propanol and isopropanol. More preferably the organic solvent is chosen from the group consisting of acetone, methylethylketone, methyl acetate, ethyl acetate, t-butylmethylether and tetrahydrofurane. Most preferably the organic solvent is chosen from the group consisting of acetone and methylethylketone. The organic solvents may be used in pure form or can also be introduced as solvent mixtures in the different steps of the manufacturing process. Copolymers (P) are prepared during the polymerization step in organic solvents and preferably with water content based on copolymers (P) not exceeding 5 wt. %.

Optionally, also the solvents which have a boiling point higher than 120°C at a pressure of 1013 mbar can be used in amounts from 0 wt.% to 5 wt.% based on polymer (P) which remain in the aqueous secondary copolymer dispersion. Not limiting examples of such solvents are butoxyethanol, butoxypropanol, solvent naphtha.

The polymer containing hydroxyl groups, preferably, but not limited to, a polyacrylate (co)polymer, polyether, polyester, polyester-co-polycarbonate that may be introduced in process step A) can be a resin which has a number average molecular weight Mₙ, of ≥ 300 g/mol to ≤ 20000 g/mol, preferably ≥ 1000 g/mol to ≤ 6000 g/mol; a hydroxyl group content of ≥ 0,5 weight-% to ≤ 10 weight-%, preferably ≥ 1 weight-% to ≤ 5 weight-%; and an acid number of ≤ 20 mg KOH/g, preferably an acid number of ≤ 15 mg KOH/g, more preferably an acid number of ≤ 10 mg KOH/g based on the resin. The polymer containing hydroxyl groups can be prepared from vinyl monomers which are free from hydroxyl and acid groups, hydroxy-functional vinyl monomers and carboxy-functional monomers, whereby hydroxy-functional vinyl monomers are a mandatory component of the copolymer containing hydroxyl groups.

Examples of vinyl monomers which are free from hydroxyl and acid groups are selected from the group consisting of (meth)acrylic acid esters with C1 to C18-hydrocarbon radicals in the alcohol portion (e.g. ethyl acrylate, n-butyl acrylate, iso-butyl acrylate, t-butyl acrylate, 2-ethylhexyl acrylate, methyl methacrylate, ethyl methacrylate, n-butyl methacrylate, iso-butyl methacrylate, t-butyl methacrylate, 2-ethylhexyl methacrylate, isobornyl acrylate, isobornyl methacrylate), styrene, vinyltoluene, α-methylstyrene, vinyl esters of carboxylic acids and radically copolymerizable vinyl monomers containing alkylene oxide units, such as condensation products of (meth)acrylic acid with oligoalkylene oxide monoalkyl ethers.

Hydroxy-functional vinyl monomers are selected from the group consisting of hydroxyethyl methacrylate, 2- and 3-hydroxypropyl methacrylate, hydroxyethyl acrylate, 2- and 3-hydroxypropyl acrylate, 4-hydroxybutyl acrylate (1,4-butanediol monoacrylate), 4-hydroxybutyl methacrylate (1,4-butanediol monometacrylate) and hydroxy monomers containing alkylene oxide units, such as addition products of ethylene oxide, propylene oxide or butylene oxide onto (meth)acrylic acid.

Acid group-functional monomers are radically copolymerizable carboxy-group functional, sulfonate-group functional, sulfate-group functional, phosphonate-group functional and phosphate-group functional vinylic monomers. Examples of acid group-functional monomers are selected from the group consisting of acrylic acid, methacrylic acid, maleic acid (anhydride), other carboxyl-functional or anhydride-functional copolymerizable monomers, sulfonated styrene, phosphonated styrene, mono-esters of (hydroxyethyl) (meth)acrylates and sulfuric acid, monoesters of (hydroxyethyl) (meth)acrylates and phosphoric acid.

The polymer containing hydroxyl groups can also be selected from the group consisting of polyether, polyester, a polyester-co-polycarbonate and polycarbonate resin.

The polymer containing hydroxyl groups can be employed in amounts of ≥ 0 weight-% to ≤ 40 weight-%, preferably ≥ 10 weight-% to ≤ 25 weight-%, based on the solids content of copolymer (P). It can be present in solvent-free form or, preferably, as a solution in organic solvents, with solids content of ≥ 40 weight-% to ≤ 100 weight-%. It can optionally be diluted to a suitable viscosity with additional organic solvents. Suitable organic solvents are selected from the group consisting of ethers, esters, ketones and alcohols, the solvents having a boiling point of ≥ 35 °C and ≤ 120 °C at a pressure of 1013 mbar. In order to maintain elevated pressures the reaction vessel is preferably sealable during the polymerization reactions in the formation of copolymer (P).

The initiator component to be added in process step B) can preferably be selected from organic peroxides, such as, but not limited to, tert-butylhydroperoxide, di-tert-butyl peroxide or tert-butyl peroxy-2-ethylhexanoate, peroxocarbonates and azo compounds. The initiator component can optionally be employed as a solution in an organic solvent, which preferably is also removed during process step G).

The total amount of initiators added in the preparation of copolymer (P) may be in a range of ≥ 0,5 weight-% to ≤ 4 weight-%, based on the total amount of polymerizable vinylic monomers. Preferably this amount is ≥ 1,0 weight-% to ≤ 3,5 weight-%. The monomer mixture comprising monomers containing hydroxyl groups introduced in step C) can be simultaneously or separately metered into the reaction vessel. The monomer mixture in step C) may contain
c1) ≥30 weight-% to ≤90 weight-% (preferably≥ 40 weight-% to ≤ 80 weight-%) of vinyl monomers which are free from hydroxyl and acid groups and
c2) ≥ 10 weight-% to ≤ 60 weight-% (preferably ≥ 10 weight-% to ≤ 30 weight-%) of hydroxy-functional vinyl monomers.

The monomer mixture in step C) can additionally contain
c3) ≥ 0 weight-% to ≤ 2 weight-% (preferably ≥ 0 weight-% to ≤ 1 weight-%) of acid group-functional monomers,
   provided that the acid number is not sufficient for dispersion or solution of the resin obtained by the polymerization in step C) in water.

The components c1 + c2 + c3 preferably add up to 100 weight-%. The total amount of the monomer mixture in step C) can be ≥ 40 weight-% to ≤ 90 weight-%, preferably ≥ 45 weight-% to ≤ 85 weight-%, based on the solids content of copolymer (P).

Furthermore, the monomer mixture in step C) can be sub-divided an several different monomer portions which can be added at different stages of the polymerization process.

The monomer mixture comprising monomers containing hydroxyl groups may also contain an initiator component, which can be the same initiator component as described in step B) or any other initiator component, optionally as a solution in organic solvents. Preferably, but not necessarily, the same initiator compound can be employed in step C) and B). The initiator component can be employed in an amount of ≥ 25 weight-% to ≤ 90 weight-%, preferably ≥ 50 weight-% to ≤ 80 weight-%, based on the total amount of initiator in the steps B), C) and D).

In step D) a monomer mixture comprising monomers containing hydroxyl and acid groups is added into the reaction vessel. The monomer mixture may contain
d1) ≥ 10 weight-% to ≤ 70 weight-%, (preferably ≥ 30 weight-% to ≤ 70 weight-%) of vinyl monomers which are free from hydroxyl and acid groups and,
d2) ≥ 10 weight-% to ≤ 70 weight-%, (preferably ≥ 20 weight-% to ≤ 60 weight-%) of hydroxy-functional vinyl monomers, and
d3) ≥ 5 weight-% to ≤ 50 weight-%, (preferably ≥ 8 weight-% to ≤ 30 weight-%) of acid group-functional monomers,
   wherein d1 + d2 + d3 preferably add up to 100 weight-%.

Furthermore, the monomer mixture in step D) can be subdivided into several different monomer portions which can be added at different stages of the polymerization process. The monomer mixture comprising monomers containing hydroxyl and acid groups may also contain an initiator component, which can be the same initiator component as described in step B) and/or C) or any other initiator component.

The initiator component in step D) may contain peroxide or azo-compounds of the type described in step B), optionally as a solution in organic solvents. Preferably, but not necessarily, the same initiator compound as used in step B) and/or C) is employed as a component in step D). The initiator component in step D) can be employed in an amount of ≥ 5 weight-% to ≤ 40 weight-%, preferably ≥ 10 weight-% to ≤ 25 weight-%, based on the total amount of initiator component in step B) + C) + D).

The total amount of initiator component in step B) + C) + D) may be ≥ 0,2 weight-% to ≤ 5,0 weight-%, preferably ≥ 1,0 weight-% to ≤ 3,5 weight-%, based on the solids of copolymer (P). The initiator can decompose either by a thermal mechanism or by a red-ox mechanism, i.e. by addition reducing agents such as ascorbic acid, glucose, sorbitol and the like. Both mechanisms can also be combined. The polymerization can be carried out at temperatures between room temperature and 200 °C preferably between ≥ 50 °C and ≤ 180 °C, most preferably between 100 and 170 °C

To tune the molecular weight of the copolymer (P) during the polymerization steps C) and/or D) chain transfer reagents can advantageously be used to avoid too high polymerization temperatures and/or too high amounts of radical initiators. Not limiting examples of chain transfer reagents are 3-thiopropionic acid, n-dodecyl mercaptane, t-dodecyl mercaptane, octyl mercaptane or mixtures of different chain transfer reagents. The chain transfer reagents are typically employed in an amount between 0.1 and 2 weight % based on monomers.

To prepare the copolymer (P) according to the invention, the metering streams and metering times of monomer and initiator components and the polymerization temperature in the particular process steps may be such that the copolymer (P) formed has an average molecular weight Mₙ of ≥ 2000 g/mol to ≤ 15000 g/mol, preferably ≥ 3000 g/mol to ≤ 6000 g/mol; an average molecular weight M_{w}, of ≥ 10000 g/mol to ≤ 50000 g/mol, preferably ≥ 15000 g/mol to ≤ 35000 g/mol; and a molecular weight distribution (M_{w}/Mₙ) of ≥ 2,2 to ≤ 6,0, preferably ≥ 2,5 to ≤ 4,0.

A particularly high level of desired properties can be achieved if the values of Mₙ obtained after process steps C) and D) deviate from one another by less than 1500 g/mol, preferably by less than 800 g/mol, and those of M_{w}/Mₙ deviate from one another by less than 1,0, preferably by less than 0,5. Ideally, the polymer chains built up in process step D) have an average molecular weight Mₙ of ≥ 3500 g/mol to ≤ 5500 g/mol.

The molecular weight distribution is measured by means of gel permeation chromatography in THF with a flow rate of 1 ml/min and calibrated against polystyrene calibration standards at room temperature. The details of the method are given in the materials and methods section.

It may be considered advantageous for the properties of copolymers (P) and of the aqueous coating compositions formulated therefrom that process steps A) - D) are carried out in a certain sequence, i.e. the monomer mixture in step C) is polymerized in the presence of polymer containing hydroxyl groups from step A), optionally an organic solvent, and the initiator component in step B); and the monomer mixture in step D) is polymerized in the presence of the copolymer (P) prepared up to and including process step C). A part of the monomeric mixture used in step D) may however be polymerized before monomeric mixture of the step C), i.e. it is not strictly required to polymerize the monomers of step C) completely before the monomers of the step D). The OH content, based on solids, of copolymers (P) can be ≥ 0,5 weight-% to ≤ 10 weight-%, preferably ≥1,0 weight-% to ≤ 8,0 weight-%, and may be established by the relative amounts of hydroxy-functional monomers employed in process steps C) and D) and by the choice of polymer containing hydroxyl groups employed in process step A). The acid number, based on solids, of copolymer (P) can be ≥ 10 mg KOH/g to ≤ 40 mg KOH/g, preferably ≥ 12 mg KOH/g to ≤ 30 mg KOH/g, and is established by the relative amounts of acid-functional monomers employed in process steps C) and D) and by the choice of polymer containing hydroxyl groups employed in process step A).

It may be advantageous that at least 60%, preferably at least 80% of the acid groups introduced into copolymer (P) can be incorporated in process step D). Copolymer (P) can optionally contain a portion of monomer units, in incorporated form, having hydrophilic alkylene oxide units or may also contain external emulsifiers to provide hydrophilicity (i.e. water dilute-ability), in addition to the acid groups. However, copolymers (P) can be preferably hydrophilically modified only by means of acid groups stemming from the vinylic monomers.

In step G) the organic solvent or solvent mixture is at least partially removed from the reaction mixture. If needed, defoaming agents may be added. While a separation by distillation is preferred, other methods such as membrane processes are not excluded per se. The evaporation process can be performed before or after a neutralization step E) and a dispersion step F). A simultaneous removal of the organic solvent mixture during the steps E) and F) is also possible. Also a partial or complete removal of the solvent is conceivable before or during the steps C) and D).

In a preferred embodyment of the invention a removal of the solvent in step G) is started after the completion of the polymerization of steps C) and D) and optionally stopped during the neutralization step E) and continued during and/or after the dispersion step F). In a particularly preferred embodiment of the present invention a removal of the solvent in step G) is started after the completion of the polymerization of steps C) and D), stopped during the addition of the base in the neutralization step E) and continued after at least one hour and set forth during and/or after the dispersion step F).

For example, the organic solvents content can be reduced by keeping the copolymer solution in a temperature range (T) which is above the boiling point of the co-solvent and/or by reduction of the pressure (p) in the reaction vessel. Preferably the organic solvents content is reduced by lowering the pressure in the reaction vessel and by heating the polymer solution. A suitable temperature and pressure for the evaporation process may range from ≥ 35 °C to ≤ 150 °C and from ≥ 50 mbar to ≤ 5000 mbar. Preferred are ≥ 50 mbar to ≤ 2000 mbar and/or a temperature of ≥ 40 °C to ≤ 100 °C, more preferred ≥ 200 mbar to ≤ 900 mbar and/or a temperature range of ≥ 50 °C to ≤ 80 °C. The evaporation process is performed until the desired organic solvent content of at least ≤ 5 wt.% is achieved.

In order to obtain a copolymer dispersion, the copolymer (P) is dispersed in an aqueous medium.

Before, during or after the dispersion of the copolymer (P) in water, the acid groups present are converted at least partially into their salt form by addition of suitable neutralizing agents. Suitable neutralizing agents are ammonia, organic amines or water-soluble inorganic bases, such as soluble metal hydroxides, metal carbonates or metal hydrogen carbonates, for example, such as sodium hydroxide or potassium hydroxide, for example. Also mixture of different neutralizing agents can be used.

It is possible to remove the organic solvent or solvent mixture before and/or during the neutralization step and prior to the dispersion step. It is also possible to remove the organic solvent during the dispersion step or after the dispersion step.

Ammonia, organic amines or water-soluble inorganic bases may be employed for neutralization of the carboxyl groups polymerized into copolymer (P). N-methylmorpholine, dimethylethylamine, triethylamine, dimethylethanolamine, dimethyl-isopropanolamine, butyldiethanolamine, triethanolamine, ethyldiisopropylamine, diethanolamine, diisopropanolamine and methyldiethanolamine are preferred. Diethylethanolamine, butanolamine, morpholine, 2-aminomethyl-2-methylpropanol and isophoronediamine, are also suitable. Ammonia is less suitable, but can also be used. The neutralizing agent can be added in an amount sufficient to neutralize 40% to 170%, preferably 60% to 140% of the carboxyl groups to the salt form. It has been found that the stability of the dispersion, the stability of the coating or adhesive composition, the wetting of pigments and the optical properties of the films can be improved significantly at this degree of neutralization. Hence it is preferred, that the pH of the aqueous dispersion, diluted to a solid content of 10 wt.%, is ≥ 4,0 to ≤ 11,0, preferably pH ≥ 7,0 to ≤ 10,0.

The invention will be further described with reference to certain embodiments and other aspects. They may be combined freely unless the context clearly indicates otherwise. If several monomers of the same denomination are used within one embodiment, this does not mean that these monomers need to be the same in another one. Furthermore, the use of the plural in connection with the monomers when describing the present invention does not imply that there need to be more than one type of monomer under one denomination present.

In one embodiment of the dispersion according to the invention the polymer containing hydroxyl groups in step A) is a resin with a number average molecular weight Mₙ of ≥ 300 g/mol to ≤ 20000 g/mol, a hydroxyl group content of ≥ 0,5 weight-% to ≤ 10 weight-% and an acid number of ≤ 20 mg KOH/g. Preferably the resin is a polyacrylate, polyester, polycarbonate resin or a mixture thereof with a number average molecular weight Mₙ of ≥ 500 g/mol to ≤ 6000 g/mol, a hydroxyl group content of ≥ 1 weight-% to ≤ 5 weight-% and an acid number of ≤ 3 mg KOH/g to ≤ 15 mg KOH/g. More preferably the resin is a polyacrylate with a number average molecular weight Mₙ of ≥ 500 g/mol to ≤ 6000 g/mol, a hydroxyl group content of ≥ 1 weight-% to ≤ 5 weight-% and an acid number of ≤ 3 mg KOH/g to ≤ 15 mg KOH/g. In another embodiment of the dispersion according to the invention the monomer mixture comprising monomers containing hydroxyl groups in step C) contains ≥ 30 weight-% to ≤ 90 weight-% (preferably ≥ 40 weight-% to ≤ 80 weight-%) of vinyl monomers (M1) which are free from hydroxyl and acid groups, ≥ 10 weight-% to ≤ 60 weight-% (preferably ≥ 15 weight-% to ≤ 30 weight-%) of hydroxy-functional vinyl monomers (M2) and ≥ 0 weight-% to ≤ 2 weight-% (preferably ≥ 0 weight-% to ≤ 1 weight-%) of acid group-functional monomers (M3).

In another embodiment of the dispersion according to the invention the monomer mixture comprising monomers containing hydroxyl and acid groups in step D) contains ≥ 10 weight-% to ≤ 70 weight-% (preferably ≥ 20 weight-% to ≤ 60 weight-%) of vinyl monomers (M1) which are free from hydroxyl and acid groups, ≥ 10 weight-% to ≤ 70 weight-% (preferably ≥ 20 weight-% to ≤ 60 weight-%) of hydroxy-functional vinyl monomers (M2) and ≥ 5 weight-% to ≤ 50 weight-% (preferably ≥ 8 weight-% to ≤ 30 weight-%) of acid group-functional monomers (M3).

Examples of monomers of group (M1) are selected from the group consisting of (meth)acrylic acid esters with C1 to C18 -hydrocarbon radicals in the alcohol portion (e.g. ethyl acrylate, n-butyl acrylate, iso-butyl acrylate, tert-butyl acrylate, 2-ethylhexyl acrylate, isobornyl acrylate, methyl methacrylate, ethyl methacrylate, n-butyl methacrylate, iso-butyl methacrylate, tert-butyl methacrylate, 2-ethylhexyl methacrylate, isobornyl methacrylate), styrene, vinyltoluene, α-methylstyrene, vinyl esters, such as vinyl esters of carboxylic acids, known as, for example, VEOVA^{®} 9 and 10, and vinyl monomers containing alkylene oxide units, such as condensation products of (meth)acrylic acid with oligoalkylene oxide monoalkyl ethers.

Hydroxy-functional monomers (M2) are selected from at least one from the group consisting of hydroxyethyl methacrylate, 2- and 3-hydroxypropyl methacrylate, hydroxyethyl acrylate, 2- and 3-hydroxypropyl acrylate, 4-hydroxybutyl acrylate, 4-hydroxybutyl methacrylate and hydroxy monomers containing alkylene oxide units, such as addition products of ethylene oxide, propylene oxide or butylene oxide onto (meth)acrylic acid.

Acid group-functional monomers (M3) are selected from the group consisting of radically copolymerizable carboxy-group functional, sulfonate-group functional, sulfate-group functional, phosphonate-group functional and phosphate-group functional vinylic monomers. Examples of acid group-functional monomers are selected from the group consisting of acrylic acid, methacrylic acid, maleic acid (anhydride), other carboxyl-functional or anhydride-functional copolymerizable monomers, sulfonated styrene, phosphonated styrene, mono-esters of (hydroxyethyl) (meth)acrylates and sulfuric acid, monoesters of (hydroxyethyl) (meth)acrylates and phosphoric acid.

In another embodiment of the dispersion according to the invention the pressure in step C) and/or step D) is ≥ 3 bar to ≤ 50 bar and/or the temperature in step C) and/or step D) is ≥ 80 °C to ≤ 180 °C. The pressure in the reaction vessel may be influenced by pressurizing with an inert gas such as nitrogen, by the temperature and by the filling level of the reaction vessel which is preferably ≥ 50% to ≤ 95%. Another influence stems from the side products formed during the radical polymerization, especially from the decomposition products of the radical initiators. Preferred pressures are 4,0 bar to ≤ 20 bar. The temperature is preferably ≥ 100 °C to ≤ 170 °C.

In another embodiment of the dispersion according to the invention the copolymer (P) has a number average molecular weight Mₙ, of ≥ 2000 g/mol to ≤ 15000 g/mol and a weight average molecular weight M_{w} of ≥ 10000 g/mol to ≤ 50000 g/mol. The molecular weights may be determined using gel permeation chromatography using tetrahydrofurane as a mobile phase against polystyrene standards at room temperature. Preferred is a number average molecular weight of ≥ 3000 g/mol to ≤ 6500 g/mol and a weight average molecular weight of ≥ 15000 g/mol to ≤ 35000 g/mol.

In another embodiment of the dispersion according to the invention the particle size of the copolymer (P) is ≥ 30 nm to ≤ 200 nm, preferably ≥ 50 nm to ≤ 150 nm. Average particle size are determined by ultra-centrifugation methods, or optical scattering methods such as laser correlation spectroscopy and are expressed as mean in Z or as number or weight averaged mean particle sizes as d50 meaning that 50% of all particles by count (number averaged) or by weight (weight averaged) are below and above of the indicated value. Preferably the particle size is ≥ 60 nm to ≤ 130 nm.

In another embodiment of the dispersion according to the invention the viscosity of the dispersion at a temperature of 23 °C and a solid content of 45 weight% to 55 weight% is ≥ 300 mPas to ≤ 5000 mPas. The viscosity is determined by using a ball-plate viscosimeter in accordance with DIN 53019 at a shear gradient of 40 s⁻¹ and a temperature of 23 °C. Preferably this viscosity is ≥ 500 mPas to ≤ 3000 mPas.

In another embodiment of the dispersion according to the invention the organic solvent content of the dispersion is ≥ 1 ppm to ≤ 5 weight-%, based on the total weight of the dispersion. The organic solvent content may be determined by quantitative distillation, head space gas chromatography, HPLC, and is preferably ≥ 1 ppm to ≤ 1,0 weight-%, based on the total weight of the dispersion. A content of organic solvent of ≥ 500 ppm to ≤ 1,0 weight-% is especially preferred.

Another aspect of the present invention is a method for producing an aqueous copolymer dispersion comprising a copolymer (P) according to the invention, comprising the steps of:
A) introducing at least one organic solvent into a reaction vessel, whereby the organic solvent optionally comprises a polymer containing hydroxyl groups,
B) introducing an initiator component into that vessel,
C) adding and polymerizing a monomer mixture comprising monomers containing hydroxyl groups in that vessel,
D) adding and polymerizing a monomer mixture comprising monomers containing hydroxyl and acid groups in that vessel,
D) at least partially neutralizing the acid groups,
E) adding water and
G) at least partially removing the organic solvent,
   characterized in that the organic solvent is selected from the group consisting of ethers, esters, ketones and alcohols each having a boiling point in the range of ≥ 35 °C and ≤ 120 °C at a pressure of 1013 mbar.

Details regarding the description of the individual steps, preferred ranges and substances, etc. have already been laid out above in connection with the description of the copolymer (P). They may, of course, also be applied in connection with the method according to the invention and are not repeated here in the interest of avoiding unnecessary repetition.

In one preferred embodiment of the method according to the invention the removal of the organic solvent in step G) is performed at a pressure of ≥ 5 mbar to ≤ 2000 mbar and/or a temperature of ≥ 40 °C to ≤ 100 °C. More preferred is such a distillation at ≥ 200 mbar to ≤ 900 mbar and/or a temperature range of ≥ 50 °C to ≤ 80 °C

For example, the organic solvents content can be reduced by keeping the copolymer solution in a temperature range (T) which is above the boiling point of the co-solvent and/or by reduction of the pressure (p) in the reaction vessel. Preferably the organic solvents content is reduced by lowering the pressure in the reaction vessel and by heating the polymer solution. A suitable temperature and pressure for the evaporation process may range from ≥ 35 °C to ≤ 150 °C and from ≥ 50 mbar to ≤ 5000 mbar. Preferred are ≥ 50 mbar to ≤ 2000 mbar and/or a temperature of ≥ 40 °C to ≤ 100 °C, more preferred ≥ 200 mbar to ≤ 900 mbar and/or a temperature range of ≥ 50 °C to ≤ 80 °C. The evaporation process is performed until the desired organic solvent content of at least ≤ 5 wt.% is achieved.

The present invention is further concerned with the use of an aqueous copolymer dispersion according to the invention in a coating material or an adhesive material.

The coating compositions according to the invention are suitable for all fields of use in which aqueous paint and coating systems with an increased profile of properties are used, e.g. coating of mineral building material surfaces, painting and sealing of wood and wood-based materials, coating of metallic surfaces (coating of metals), coating and painting of asphalt- or bitumen-containing coverings, painting and sealing of various surfaces of plastic (coating of plastics) and high gloss paints.

The paints or coating compositions prepared using the binder combinations according to the invention are suitable for use as primers, fillers, pigmented or transparent top coats, clear paints and high gloss paints, as well as one-coat paints, which may be applied individually or in series, e.g., in the field of industrial painting and for initial and repair painting of automobiles.

The coating and adhesive compositions can be applied by various spraying processes, such as compressed air, airless or electrostatic spraying processes, using one- or optionally two-component spraying equipment. However, the paints and coating compositions to be prepared and used according to the invention can also be applied by other methods, for example, by brushing, rolling or knife-coating.

Another aspect of the present invention is the use of an aqueous copolymer dispersion according to the invention as a binder for aqueous two-component polyurethane coatings and adhesives in combination with cross-linkers (X). Here the copolymers (P), which can be present as a dispersion and/or solution in water, may be employed in or as paint or coating compositions (optionally together with other binders or dispersions, e.g. based on polyesters, polyurethanes, polyethers, polyepoxides or polyacrylates) in combination with cross-linking resins and optionally pigments and other additives known in the paint industry. Such a combination can contain ≥ 50 weight-% to ≤ 95 weight-%, preferably ≥ 65 weight-% to ≤ 90 weight-%, of copolymer (P), optionally mixed with other binders or dispersions, and ≥ 5 weight-% to ≤ 50 weight-%, preferably ≥ 10 weight-% to ≤ 35 weight-%, of a cross-linking resin or mixture of cross-linking resins.

Depending upon the reactivity or optional blocking of the cross-linking agents either one-component paints and two-components coating compositions can be formulated with cross-linking agents. One-component coating compositions in the context of the present invention are understood to be coating compositions in which the binder component and cross-linking agent can be stored together without a cross-linking reaction taking place to an extent which is noticeable or harmful to the later application. The cross-linking reaction takes place only after application and after activation of the cross-linking agent, e.g. by an increase in temperature.

Two-component coating compositions in the context of the present invention may be understood to be coating compositions in which the binder component and cross-linking agent component must be stored in separate vessels because of their high reactivity. The two components are mixed only shortly before application and then react without additional activation; however, catalysts can also be employed or higher temperatures applied in order to accelerate the cross-linking reaction.

Suitable cross-linking resins include amide- and amine-formaldehyde resins, phenolic resins, aldehyde and ketone resins, such as phenol-formaldehyde resins, resols, furane resins, urea resins, carbamic acid ester resins, triazine resins, melamine resins, benzoguanamine resins, cyanamide resins and aniline resins. These resins are described in "Lackkunstharze [Synthetic Resins for Paints]", H. Wagner, H. F. Sarx, Carl Hanser Verlag, Munich, 1971.

Also water-dilutable polycarbodiimides and carbodiimide dispersions can be used as crosslinking agents. These polycarbodiimides are for example described in Progress in Organic Coatings 58 (2007) 231-236.

In another embodiment, the invention is also directed towards an aqueous polyurethane coating material comprising an aqueous copolymer dispersion according to the invention and an isocyanate-group containing cross-linker (X). Within this cross-linker class especially preferred are the polyisocyanates, which have two or more NCO groups per molecule and are based for example on isophorone diisocyanate, hexamethylene diisocyanate, 1,4-diisocyanatocyclohexane, bis(4-isocyanatocyclohexane)methane, 1,3-diisocyanatobenzene, triisocyanatononane or the isomeric 2,4- and 2,6-TDI, and may further contain urethane, isocyanurate and/or biuret groups. Optionally the polyisocyanates may also be blocked.

Particular preference is given to the use of polyisocyanates of the abovementioned kind, based on aliphatic or cycloaliphatic isocyanates. Optionally these may also be hydrophilized.

The polyisocyanates used as cross-linker can have a viscosity at 23 °C of 10 to 5000 mPas, the viscosity being determined by using a ball-plate viscosimeter in accordance with DIN 53019 at a shear gradient of 40 s⁻¹, and may also be employed, if desired in order to adjust viscosity, in a blend with small amounts of inert solvents.

The copolymers of the invention are generally hydrophilic enough that even hydrophobic cross-linker resins can be dispersed without additional emulsifiers. However, this is not to rule out the use of external emulsifiers.

Water-soluble or dispersible polyisocyanates are obtainable for example by modification of carboxylate, sulphonate and/or polyethylene oxide groups and/or polyethylene oxide/polypropylene oxide groups. The polyisocyanates can be made hydrophilic by means for example of reaction with substoichiometric amounts of monohydric, hydrophilic polyether alcohols. The preparation of hydrophilized polyisocyanates of this kind is described for example in EP-A 0 540 985 (p. 3, 1.55 to p. 4, 1.5). Also highly suitable may be the polyisocyanates containing allophanate groups that are described in EP-A 959 087 (p. 3, 1.39 to 51), which are prepared by reacting low-monomer-content polyisocyanates with polyethylene oxide polyether alcohols under allophanatization conditions. Also suitable can be the water-dispersible polyisocyanate mixtures described in DE-A 100 078 21 (p. 2, 1.66 to p. 31.5), which are based on tri-isocyanatononane. Of particular suitability and preference are polyisocyanates hydrophilized with ionic groups, especially sulphonate groups, of the kind described in DE-A 100 24 624 (P. 3 11.13 to 33), for example.

In principle it is of course also possible to use mixtures of different cross-linker resins.

The ratio of the hydroxyl groups of the binder component to the isocyanate groups of the cross-linker (X) can be typically 3:1 to 1:5, preferably 2:1 to 1:3 and with particular preference 1:1 to 1:2.

### Examples:

The present invention will be further described in connection to the following examples without wishing to be limited by them.

### Glossary

| | |
|---|---|
| Desmophen^{®} A160 | Hydroxyl-group containing hydrophobic polyacrylate (Viverso GmbH, Nuplex Resins GmbH) |
| Desmodur^{®} N3900 | Low-viscosity, aliphatic polyisocyanate resin based on HDI |
| Bayhydur^{®} 304 | Hydrophilically modified, aliphatic polyisocyanate based on HDI |
| Bayhydur^{®} XP 2655 | Hydrophilic aliphatic polyisocyanate based on HDI |
| Bayhydrol^{®} A 145 | Polyacrylate dispersion; co-solvent containing |
| Bayhydrol^{®} A 2470 | Polyacrylate dispersion; co-solvent containing |
| HDI | 1,6-Hexamethylene diisocyanate |
| MEK | Methylethylketone |

### Materials and Methods:

Viscosity measurements were made in a ball-plate viscosimeter in accordance with DIN 53019 at a shear gradient of 40 s⁻¹ and a temperature of 23 °C.

GPC measurements were made on a column combination of Macherey & Nagel, filled with partly crosslinked polystyrene/divinylbenzene gel (Nucleogel):
1. (Precolumn) Nucleogel GPC 10P, 10 µm, 50 x 7.7 mm
2. Nucleogel GPC 106-10, 10 µm, 300 x 7.7 mm
3. Nucleogel GPC 104-10, 10 µm, 300 x 7.7 mm
4. Nucleogel GPC 500-10, 10 µm, 300 x 7.7 mm
5. Nucleogel GPC 100-10, 10 µm, 300 x 7.7 mm

Further hardware components:
Column oven: Merck L 7360;
Pump, injector: Hewlett Packard 1050 series II;
Detectors: DAD Hewlett Packard 1050+RI detector Hewlett Packard 1047 A

The mobile phase was THF with a flow rate of 0,6 ml/min under a pressure of approx. 65 bar; the measurement temperature was 30 °C. 100 µl of the sample with a polymer concentration of approx. 5,0 g/l were injected. Calibration was effected with polystyrene calibration standards of narrow distribution from Polymer-Standard-Service GmbH (PSS) of the corresponding molecular weight range.

Particle sizes were determined by laser correlation spectroscopy with a Malvern Zetasizer 1000 (Malvern Instruments, Ltd.) and expressed as mean in Z.

Solids contents were determined according to DIN EN ISO 3251 and are expressed as weight-% (oven temperature of 120°C).

OH numbers were determined according to DIN 53240/2.

### Example 1: Comparative example (corresponds to example 1 of US 6,399,691)

515 g of a hydrophobic polyacrylate resin (Desmophen® A 160, Viverso GmbH, Nuplex Resins GmbH, Bitterfeld, DE), as a 60% solution in solvent naphtha 100, with an OH content (based on solids) of 2,6%, an acid number (based on solids) of 5 mg KOH/g, an average molecular weight, Mₙ of 4800 g/mol and a polydispersity (M_{w},/Mₙ) of 2,9, were initially introduced into a 6 liter reaction vessel with a stirring, cooling and heating device together with 172 g n-butoxypropanol and the mixture was heated up to 138 °C (A).

A solution of 8 g di-tertbutyl peroxide in 8 g n-butoxypropanol was added at this temperature in the course of 20 min (B).

Thereafter, a monomer mixture of 762 g methyl methacrylate, 355 g butyl methacrylate, 52 g butyl acrylate and 507 g hydroxyethyl methacrylate and simultaneously a solution of 32,5 g di-tert-butyl peroxide in 35 g n-butoxypropanol were metered at this temperature in the course of 4 hours, 30 min (C).

The mixture was kept at 138 °C for 30 min and a mixture of 128 g methyl methacrylate, 100 g butyl acrylate, 180 g hydroxyethyl methacrylate and 60 g acrylic acid and simultaneously a solution of 8 g di-tert-butyl peroxide in 20 g n-butoxypropanol were then metered in over a period of 90 min (D).

After stirring at 138 °C for a further hour, the mixture was cooled to 90 °C, 78 g dimethylethanolamine were added and the mixture was homogenized and dispersed in 2400 g water. The resulting copolymer (P) was present as a dispersion in water and had an OH content (based on solids) of 3,9%, an acid number (based on solids) of 20 mg KOH/g, a solids content of 47% and a viscosity (freshly prepared) of approximately 1500 mPas (23 °C, shear gradient 40 s⁻¹). The pH (10% in water) was 8,4 and the degree of neutralization was 105%. The dispersion was easily filtered and had an average particle size of approximately 200 nm. After storage at room temperature for 6 weeks, the viscosity of the dispersion was 1200 mPas. Content of the organic solvent based on dispersion 8 weight-%.

### Example 2: According to the invention, using MEK as co-solvent (90 volume % of reactor filling degree)

Example 1 was repeated in a 15 liter reactor and with the difference that instead of naphtha 100, MEK was used to disperse the hydrophobic acrylate resin at the beginning of the reaction. In addition, MEK was used to replace the co-solvent n-butoxypropanol in steps A-D. The reaction vessel was pressurized with1 bar N₂ and then closed. The maximum pressure within the reaction vessel was 7 bar in the beginning and 10 bar after ca. 5 hours of the reaction time.

After neutralization and addition of water the temperature was lowered to 70 °C and the MEK was removed by a stepwise reduction of the pressure in the reaction vessel. The resulting copolymer (P) was present as a dispersion in water and displayed a solids content of 48,5%, a particle size of 96 nm, a viscosity of 1960 mPas (T=23 °C, 40 s⁻¹), a number average molecular weight Mₙ of 3930 g/mol and a weight average molecular weight M_{w} of 37250 g/mol. The residual MEK-content was at 700 ppm.

### Example 3: According to the invention, using MEK as co-solvent, (80 volume % of reactor filling degree)

Example 1 was repeated in a 15 liter reactor and with the difference that instead of naphtha 100, MEK was used to disperse the hydrophobic acrylate resin at the beginning of the reaction. In addition, MEK was used to replace the co-solvent n-butoxypropanol in steps A-D. The reaction vessel was pressurized with1 bar N₂ and then closed. The maximum pressure within the reaction vessel was 4,5 bar in the beginning and 4,5 bar after ca. 5 hours of reaction time.

After neutralization and addition of water the temperature was lowered to 70 °C and the MEK was removed by a stepwise reduction of the pressure in the reaction vessel. The resulting copolymer (P) was present as a dispersion in water and displayed a solids content of 49 %, a particle size of 92 nm, a viscosity of 1460 mPas (T=23 °C, 30 s⁻¹), a number average molecular weight Mₙ of 5440 g/mol and a weight average molecular weight M_{w} of 27500 g/mol. The residual MEK-content was at 1100 ppm.

### Example 4: According to the invention using acetone as co-solvent, (80 volume % of reactor filling degree)

Example 1 was repeated in a 15 liter reactor with the difference that instead of naphtha 100, acetone was used to disperse the hydrophobic acrylate resin at the beginning of the reaction. In addition, acetone was used to replace the co-solvent n-butoxypropanol in steps A-D. The reaction vessel was pressurized with1 bar N₂ and then closed. The maximum pressure within the reaction vessel was 9 bar in the beginning and 6 bar after ca. 5 hours of reaction time.

After neutralization and the addition of water the temperature was lowered to 70 °C and the acetone was removed by a stepwise reduction of the pressure in the reaction vessel. The resulting copolymer (P) was present as a dispersion in water and displayed a solids content of 49,5%, a particle size of 63 nm, a viscosity of 1300 mPas (T=23 °C, 40 s⁻¹), a number average molecular weight Mₙ of 6200 g/mol and a weight average molecular weight M_{w} of 30000 g/mol.

### Example 5: According to the invention using MEK as co-solvent and 2x radical initiator, (80 volume-% reactor filling degree)

Example 1 was repeated in a 15 liter reactor with the difference that instead of naphtha 100, MEK was used to disperse the hydrophobic acrylate resin at the beginning of the reaction. In addition, MEK was used to replace the co-solvent n-butoxypropanol in steps A-D and the di-tert-butyl peroxide amount in step B + C + D was doubled. The reaction vessel was pressurized with1 bar N₂ and then closed. The maximum pressure within the reaction vessel was 9 bar in the beginning and 5,5 bar after ca. 5 hours of reaction time.

After neutralization and addition of water the temperature was lowered to 70 °C and the MEK was removed by a stepwise reduction of the pressure in the reaction vessel. The resulting copolymer (P) was present as a dispersion in water and displayed a solids content of 47,9%, a particle size of 103 nm, a viscosity of 1430 mPas (T=23 °C, 40 s⁻¹), a number average molecular weight Mₙ of 4280 g/mol and a weight average molecular weight M_{w} of 20350 g/mol.

### Example 6: According to the invention using MEK as co-solvent and 2x radical initiator amount, no N₂-purge, (80 volume % of reactor filling degree)

Example 1 was repeated in a 15 liter reactor with the difference that instead of naphtha 100, MEK was used to disperse the hydrophobic acrylate resin at the beginning of the reaction. In addition, MEK was used to replace the co-solvent n-butoxypropanol in steps A-D and the di-tert-butyl peroxide amount in step B + C + D was doubled. The maximum pressure within the reaction vessel was 4,5 bar in the beginning and 4,3 bar after ca. 5 hours of reaction time.

After neutralization and addition of water the temperature was lowered to 70 °C and the MEK was removed by a stepwise reduction of the pressure in the reaction vessel. The resulting copolymer (P) was present as a dispersion in water and displayed a solids content of 47,9%, a particle size of 78 nm, a viscosity of 1400 mPas (T=23 °C, 40 s⁻¹).

### Example 7: According to the invention using MEK as co-solvent and n-dodecylmercaptane as chain transfer reagent

Example 3 was repeated with the difference that additionally 0,75wt.% n-dodecylmercaptane, based on vinylic monomers, was introduced as a chain transfer reagent in the process. After neutralization and addition of water the temperature was lowered to 70 °C and the MEK was removed by a stepwise reduction of the pressure in the reaction vessel. The resulting copolymer (P) was present as a dispersion in water and displayed a solids content of 50%, a particle size of 111 nm, a viscosity of 1330 mPas (T=23 °C, 40 s⁻¹), a number average molecular weight Mₙ of 5750 g/mol and a weight average molecular weight M_{w} of 22160 g/mol.

### Example 8: According to the invention using MEK as co-solvent and n-dodecylmercaptane as chain transfer reagent

Example 3 was repeated with the difference that additional 0,75 wt.% n-dodecylmercaptane, based on vinylic monomers, was introduced as a chain transfer reagent in the process. After neutralization and addition of water the temperature was lowered to 70 °C and the MEK was removed by a stepwise reduction of the pressure in the reaction vessel. The resulting copolymer (P) was present as a dispersion in water and displayed a solids content of 53,3%, a particle size of 110 nm, a viscosity of 1300 mPas (T=23 °C, 50 s⁻¹), a number average molecular weight Mₙ of 4120 g/mol and a weight average molecular weight Mₙ of 26390 g/mol.

### Example 9: According to the invention using MEK as co-solvent and n-dodecylmercaptane as chain transfer reagent and 1,5x initiator amount

Example 3 was repeated with the difference that additional 0,75wt.% n-dodecylmercaptane, based on vinylic monomers, was introduced as a chain transfer reagent in the process and that the di-tert-butyl peroxide amount in step B + C + D was changed by a factor of 1,5. After neutralization and addition of water the temperature was lowered to 70 °C and the MEK was removed by a stepwise reduction of the pressure in the reaction vessel. The resulting copolymer (P) was present as a dispersion in water and displayed a solids content of 49,9%, a particle size of 113 nm, a viscosity of 1450 mPas (T=23 °C, 50 s⁻¹), a number average molecular weight Mₙ of 3780 g/mol and a weight average molecular weight M_{w} of 21050 g/mol.

### Example 10: According to the invention using MEK as co-solvent and n-dodecylmercaptane as chain transfer reagent and 1,5x initiator amount

Example 3 was repeated with the exception that additional 0,75wt.% n-dodecylmercaptane, based on vinylic monomers, was introduced as a chain transfer reagent in the process and that the di-tert-butyl peroxide amount was changed by a factor of 1,5. After neutralization and addition of water the temperature was lowered to 70 °C and the MEK was removed by a stepwise reduction of the pressure in the reaction vessel. The resulting copolymer (P) was present as a dispersion in water and displayed a solids content of 47,6%, a particle size of 110 nm, a viscosity of 1000 mPas (T=23 °C, 40 s⁻¹), a number average molecular weight Mₙ of 3580 g/mol and a weight average molecular weight M_{w} of 16900 g/mol.

The results are summarized in the following table:

| **Example** | **Solvent** | **Mₙ** | **M_{w}** | **Particle Size** | **Solids Content** | **Viscosity** |
|---|---|---|---|---|---|---|
| | | **g/mol** | **g/mol** | **nm** | **weight-%** | **mPas** |
| 1 (comp.) | Naphtha, n-butoxypropanol | 4500 | 15500 | 200 | 47 | 1500 |
| 2 | MEK | 3930 | 37250 | 96 | 48,5 | 1960 |
| 3 | MEK | 5440 | 2750 | 92 | 49 | 1460 |
| 4 | Acetone | 6200 | 30000 | 63 | 49,5 | 1300 |
| 5 | MEK | 4280 | 20350 | 103 | 47,9 | 1430 |
| 6 | MEK | n.d. | n.d. | 78 | 49,3 | 1400 |
| 7 | MEK | 5750 | 22160 | 111 | 50 | 1330 |
| 8 | MEK | 4120 | 26390 | 110 | 53,3 | 1300 |
| 9 | MEK | 3780 | 21050 | 113 | 49,9 | 1450 |
| 10 | MEK | 3580 | 16900 | 110 | 47,6 | 1000 |

From these results the following conclusions can be drawn: the particle size of the dispersions can be lower than in the comparative example and in the standard polyacrylate dispersions Bayhydrol^{®} A 145 (120 to 160 nm) and Bayhydrol® A 2470 (150 to 200 nm). Furthermore, the accessible solids content at a given viscosity is considerably higher.

### Example 11: 2K water-based coating formulations

Two-component water-based coating formulations were prepared according to the following table:

| **Binder of example no.** | **Hardener(s)** |
|---|---|
| 3, 5 and 7, respectively; pigmented | Desmodur® N3900, Bayhydur® 304 and Bayhydur® XP 2655, respectively |
| 3, 5, 7, 4 and 2, respectively; clear coat | Desmodur® N3900 |
| 5; clear coat | Bayhydur® XP 2655 |
| 8, 9 and 10, respectively; pigmented | Desmodur® N3900 |

The following observations were done during the application testing: good film optics and clear coats were observed. A molecular weight Mₙ of 3600 g/mol to 6000 g/mol and M_{w} of 14000 g/mol to 25000 g/mol, respectively, led to the best gloss and haze results. Furthermore, secondary acrylate binders which were synthesized with a moderately increased initiator amount displayed comparable water resistance to the standard coatings from comparative results (the binder of example 5, for example)

## Claims

1. An aqueous secondary copolymer dispersion comprising a copolymer (P) obtained by a process comprising the steps of:
A) introducing at least one organic solvent into a reaction vessel, whereby the organic solvent optionally comprises a polymer containing hydroxyl groups,
B) introducing an initiator component into that vessel,
C) adding and polymerizing a monomer mixture comprising monomers containing hydroxyl groups in that vessel,
D) adding and polymerizing a monomer mixture comprising monomers containing hydroxyl and acid groups in that vessel,
E) at least partially neutralizing the acid groups,
F) adding water and
G) at least partially removing the organic solvent,
**characterized in that** the organic solvent is selected from the group consisting of ethers, esters, ketones and alcohols each having a boiling point in the range of ≥ 35 °C and ≤ 120 °C at a pressure of 1013 mbar.

2. The aqueous copolymer dispersion according to claim 1, wherein the polymer containing hydroxyl groups in step A) is a resin with a number average molecular weight Mₙ of ≥ 300 g/mol to ≤ 20000 g/mol, a hydroxyl group content of ≥ 0,5 weight-% to ≤ 10 weight-% and an acid number of ≤ 20 mg KOH/g.

3. The aqueous copolymer dispersion according to claim 1, wherein the monomer mixture comprising monomers containing hydroxyl groups in step C) contains ≥ 30 weight-% to ≤ 90 weight-% of vinyl monomers (M1) which are free from hydroxyl and acid groups, ≥ 10 weight-% to ≤ 60 weight-% of hydroxy-functional vinyl monomers (M2) and ≥ 0 weight-% to ≤ 2 weight-% of acid group-functional monomers (M3).

4. The aqueous copolymer dispersion according to claim 1, wherein the monomer mixture comprising monomers containing hydroxyl and acid groups in step D) contains ≥ 10 weight-% to ≤ 70 weight-% of vinyl monomers (M1) which are free from hydroxyl and acid groups, ≥ 10 weight-% to ≤ 70 weight-% of hydroxy-functional vinyl monomers (M2) and ≥ 5 weight-% to ≤ 50 weight-% of acid group-functional monomers (M3).

5. The aqueous copolymer dispersion according to claim 1, wherein the organic solvent is chosen from the group consisting of acetone, methyl acetate, ethyl acetate, methylethylketone, tetrahydrofurane and t-butyl-methylether.

6. The aqueous copolymer dispersion according to claim 1, wherein the pressure in step C) and/or step D) is ≥ 3 bar to ≤ 50 bar and/or wherein the temperature in step C) and/or step D) is ≥ 70 °C to ≤ 180 °C.

7. The aqueous copolymer dispersion according to claim 1, wherein the copolymer (P) has a number average molecular weight Mₙ, of ≥ 2000 g/mol to ≤ 15000 g/mol and a weight average molecular weight M_{w} of ≥ 10000 g/mol to ≤ 50000 g/mol.

8. The aqueous copolymer dispersion according to claim 1, wherein the particle size of the copolymer (P) is ≥ 30 nm to ≤ 200 nm.

9. The aqueous copolymer dispersion according to claim 1, wherein the viscosity of the dispersion at a temperature of 23 °C and a solid content of 45 weight% to 55 weight% is ≥ 300 mPas to ≤ 5000 mPas, the viscosity being determined by using a ball-plate viscosimeter in accordance with DIN 53019 at a shear gradient of 40 s⁻¹.

10. The aqueous copolymer dispersion according to claim 1, wherein the organic solvent content of the dispersion is ≥ 1 ppm to ≤ 5 weight-%, based on the total weight of the dispersion.

11. A method for producing an aqueous copolymer dispersion comprising the steps of:
A) introducing at least one organic solvent into a reaction vessel, whereby the organic solvent optionally comprises a polymer containing hydroxyl groups,
B) introducing an initiator component into that vessel,
C) adding and polymerizing a monomer mixture comprising monomers containing hydroxyl groups in that vessel,
D) adding and polymerizing a monomer mixture comprising monomers containing hydroxyl and acid groups in that vessel,
E) at least partially neutralizing the acid groups,
F) adding water and
G) at least partially removing the organic solvent,
**characterized in that** the organic solvent is selected from the group consisting of ethers, esters, ketones and alcohols each having a boiling point in the range of ≥ 35 °C and ≤ 120 °C at a pressure of 1013 mbar.

12. The method according to claim 11, wherein the removal of the organic solvent in step G) is performed at a pressure of ≥ 50 mbar to ≤ 2000 mbar and/or a temperature of ≥ 40 °C to ≤ 100 °C.

13. Use of aqueous copolymer dispersions according to one or more of claims 1 to 10 in a coating or adhesive material.

14. Use of aqueous copolymer dispersions according to one or more of claims 1 to 10 as a binder.

15. Use of an aqueous copolymer dispersion according to one or more of claims 1 to 10 as a binder for aqueous two-component polyurethane coatings or adhesives in combination with cross-linkers (X).
